# EUROPEAN PATENT SPECIFICATION

(11) **EP 2 308 361 B1**
(45) Date of publication and mention of the grant of the patent: **18.10.2017**
(21) Application number: 09729139.7
(22) Date of filing: 30.03.2009
(51) Int. Cl.: A47L 13/10, A47L 13/20

(54) **Cleaning tool and cleaning element**
Reinigungswerkzeug und Reinigungselement
Outil de nettoyage et élément de nettoyage

(30) Priority: 31.03.2008 JP 2008090888
(43) Date of publication of application: 13.04.2011
(73) Proprietor: UNI-CHARM CORPORATION, Ehime 799-0111 (JP)
(72) Inventor: TANAKA, Yoshinori, Kanonji-shi Kagawa 769-1602 (JP); FUKUZAWA, Masumi, Kanonji-shi Kagawa 769-1602 (JP)
(74) Representative: Murgatroyd, Susan Elizabeth
(86) International application number: PCT/JP2009/056519
(87) International publication number: WO 2009/123129

(56) References cited:
- WO-A1-2007/046252
- WO-A1-2007/046252
- JP-A- 11 000 298
- JP-A- 11 000 298
- JP-A- 2007 209 460
- US-A1- 2005 172 440

## Description

### BACKGROUND OF THE INVENTION

### Field of the Invention

The invention relates to a cleaning tool, and more particularly to a technique for providing a cleaning tool having a cleaning element for cleaning an object to be cleaned.

### Description of the related Art

Various types of cleaning tools having a sheet-type cleaning element for cleaning an object to be cleaned are known. For example, Japanese non-examined laid-open Patent Publication No. 2007-29136 discloses a cleaning tool having a cleaning element which comprises a fabric layer and a scraping sheet. However, in designing a cleaning tool of this type having a cleaning element, it is required to provide an effective technique for realizing a smoother cleaning operation.

US 2005/172440 A1 discloses a cleansing device including a cleansing cloth having a base and a cover fabric layers superposed together, and a number of fibers disposed and secured between the base and the cover fabric layers. A handle is attached to the cleansing cloth to carry and operate the cleansing cloth. Each of the fabric layers may include a number of strips to partially expose the fibers. An outer fabric layer may be attached to the cover fabric layer to form one or more pockets and to receive the handle. The handle includes a fork having two arms engageable into the pocket of the cleansing cloth, and a hand grip foldably secured to the fork.

### SUMMARY OF THE INVENTION

Accordingly, it is an object of the invention to provide an effective technique for realizing smoother cleaning operation in a cleaning tool having a cleaning element for cleaning an object to be cleaned.

The above-described problem is solved by the cleaning element and cleaning tool as defined in the appended claims.

This invention can be applied to the construction of cleaning tools for cleaning regions to be cleaned (floors, walls, ceilings, external walls, posts, furniture, clothes, curtains, blinds, bedding, lighting, electrical cords, home electric appliances, etc.) inside and outside of houses, apartments, buildings, factories, vehicles, etc. or regions of human body parts to be cleaned. These regions to be cleaned may be either flat or curved, uneven or stepped.

A cleaning tool according to the invention is used for cleaning an object to be cleaned and includes at least a cleaning element holder and a cleaning element. The cleaning element holder is an elongate member. The cleaning element holder includes a grip to be held by a user and a plurality of holding elements extending from the grip in parallel in a longitudinal direction. In order to extend in "parallel" here, the holding elements are required to be disposed at least side by side. Such a manner of extending in parallel here includes the manner in which a plurality of the holding elements are disposed in parallel, and the manner in which the distance between two adjacent holding elements is decreased toward the front end. The cleaning element is designed as a member to be attached to the elongate cleaning element holder. Particularly, the cleaning element includes a plurality of elongate split cleaning parts which have respective insert regions for receiving the holding elements. The manner of being "split" here widely includes the manner in which a predetermined split cleaning part is disposed in its entirety or in part across the space from the other split cleaning part, and the manner in which a predetermined split cleaning part may be integrally connected to the other split cleaning part. Further, each of the split cleaning parts of the cleaning element includes a fiber assembly formed by a plurality of fibers extending in a direction transverse to the longitudinal direction of the split cleaning part, and a nonwoven fabric sheet made of nonwoven fabric, and the fiber assembly and the nonwoven fabric sheet are overlaid one on the other and bonded together via a bonded part extending in the longitudinal direction. The bonded part may continuously or discontinuously extend in a linear or curved configuration in a longitudinal direction of the split cleaning parts. Further, the number and combination of the fiber assemblies and nonwoven fabric sheets which are overlaid one on the other and bonded together can be selected as necessary.

With such construction of the cleaning tool according to this invention, cleaning operation can be smoothly performed. Specifically, when an object to be cleaned is planarly cleaned, the cleaning element contacts the plane surface of the object to be cleaned via at least the fiber assemblies of the two split cleaning parts, so that the user can secure a stable wiping angle during wiping operation without keeping the wrist stabilized more than necessary. Further, at least the fiber assemblies of the two split cleaning parts contact the object to be cleaned, so that an effect for two or more wiping operations can be obtained in a single wiping operation.

Further, the cleaning element according to this invention may be of disposable type designed for single use, disposable type designed for multiple use which can be used several times, while holding dust or dirt which has been removed from the object to be cleaned, on a brush portion, or reusable type which can be reused by washing.

The split cleaning part is constructed such that the fiber assembly is overlaid on both of its sides by the nonwoven fabric sheet and bonded together via the bonded part. The nonwoven fabric sheet can be formed as one or more layers of the nonwoven fabric sheets. With such construction, the cleaning element is provided which allows a cleaning operation using the fiber assemblies on the both sides of the nonwoven fabric sheet.

The fibers of each of the fiber assemblies radiate out from the bonded part when viewed in a section taken in the direction transverse to the longitudinal direction of the split cleaning part. With such construction, the cleaning element is provided in which the fibers of the fiber assembly radiate out from the bonded part.

The fibers of each of the fiber assemblies form a generally circular or elliptical shape in section in a direction transverse to the longitudinal direction of the split cleaning part. Thus, the plurality of the split cleaning parts having generally circular or elliptical sections are disposed in parallel. The manner of "forming a generally circular or elliptical shape in section" widely includes the manner in which the fibers of the fiber assembly form a generally circular or elliptical shape in its entirety or in part. For example, the section of the fibers of the fiber assembly may also have a shape of one or more fans which forms part of a circular form. With such construction, the fiber assembly of each of the split cleaning parts has an arcuate contact service, so that the fiber assembly can be smoothly deformed when slid along the surface of the object to be cleaned. As a result, friction between the fiber assembly and the object to be cleaned can be reduced, so that smooth cleaning operation can be realized, that is to say, the cleaning tool feels light to use in cleaning operation.

The nonwoven fabric sheet comprises a plurality of split pieces extending in a direction transverse to the longitudinal direction of the split cleaning parts. The split pieces are typically formed by splitting the nonwoven fabric sheet into strips. With such construction, the cleaning element can be provided with a wiping function by the fiber assembly and a scraping function by the split pieces.

In one embodiment of the cleaning tool according to this invention, a space is provided into which the object to be cleaned can be inserted between adjacent ones of the split cleaning parts. Such construction is effective in cleaning operation of wiping the object to be cleaned while holding it between the fiber assemblies of at least two split cleaning parts, or in cleaning operation of wiping the object to be cleaned by inserting at least one of the split cleaning parts into a clearance (or a slit or opening) on the side of the object to be cleaned.

As described above, according to the invention, in a cleaning tool having a cleaning element for cleaning an object to be cleaned, smoother cleaning operation can be realized.

### BRIEF DESCRIPTION OF THE DRAWINGS

FIG. 1 is a perspective view showing a cleaning tool 100 according to an embodiment of the invention, in a state disassembled into a cleaning element 110 and a cleaning element holder 130.
FIG. 2 is a sectional view of the cleaning element 110, taken along line A-A in FIG. 1.
FIG. 3 is a sectional view of the cleaning element 110, taken along line B-B in FIG. 1.
FIG. 4 is a perspective view of the cleaning element 110 of FIG. 1, in a state separated into layer elements.
FIG. 5 is a perspective view of the holding sheet 112 of the cleaning element 110 in FIG. 2.
FIG. 6 is a sectional view of the cleaning element 110 according to this embodiment of the invention, in the states before and after attachment of the cleaning element holder.
FIG. 7 is a sectional view of the split cleaning parts 123 according to this embodiment, illustrating a first procedure for attaching the cleaning element holder.
FIG. 8 is a sectional view of the split cleaning parts 123 according to this embodiment, illustrating a second procedure for attaching the cleaning element holder.
FIG. 9 shows a manner in which an object to be cleaned W is wiped between a pair of split cleaning parts 123 of the cleaning element 110 in the cleaning tool 100 of this embodiment.
FIG. 10 shows a manner in which the object to be cleaned W is wiped between the pair of split cleaning parts 123 of the cleaning element 110 in the cleaning tool 100 of this embodiment.
FIG. 11 shows the manner in which the object to be cleaned W is wiped between the pair of split cleaning parts 123 of the cleaning element 110 in the cleaning tool 100 of this embodiment.
FIG. 12 shows the manner in which the object to be cleaned W is wiped between the pair of split cleaning parts 123 of the cleaning element 110 in the cleaning tool 100 of this embodiment.
FIG. 13 shows a manner in which the object to be cleaned W is wiped on outer surfaces of the pair split cleaning parts 123 of the cleaning element 110 in the cleaning tool 100 of this embodiment.
FIG. 14 shows the manner in which the object to be cleaned W is wiped on outer surfaces of the pair split cleaning parts 123 of the cleaning element 110 in the cleaning tool 100 of this embodiment.
FIG. 15 shows the manner in which the object to be cleaned W is wiped on outer surfaces of the pair split cleaning parts 123 of the cleaning element 110 in the cleaning tool 100 of this embodiment.
FIG. 16 shows the manner in which the object to be cleaned W is wiped on outer surfaces of the pair split cleaning parts 123 of the cleaning element 110 in the cleaning tool 100 of this embodiment.
FIG. 17 shows the manner in which the object to be cleaned W is wiped on outer surfaces of the pair split cleaning parts 123 of the cleaning element 110 in the cleaning tool 100 of this embodiment.
FIG. 18 is a perspective view schematically showing a cleaning tool 200 according to a further embodiment of the invention, in a state disassembled into a cleaning element 210 and a cleaning element holder 230.
FIG. 19 is a perspective view schematically showing a cleaning tool 300 according to a further embodiment of the invention, in a state disassembled into a cleaning element 310 and a cleaning element holder 330.
FIG. 20 is a schematic sectional view of a cleaning element 410 according to a further embodiment of the invention.

### DETAILED DESCRIPTION OF THE INVENTION

A structure of a cleaning tool 100 according to this embodiment is now described with reference to the drawings. The cleaning tool 100 is configured as the cleaning tool for cleaning an object to be cleaned. Objects to be cleaned typically include regions to be cleaned (floors, walls, windows, ceilings, external walls, posts, furniture, clothes, curtains, blinds, bedding, lighting, electrical cords, home electric appliances, etc.) inside and outside of houses, apartments, buildings, factories, vehicles, etc. and regions of human body parts to be cleaned. These various types of objects to be cleaned include a planar structure or three-dimensional structure. In this case, regions to be cleaned may be either flat, curved, uneven or stepped.

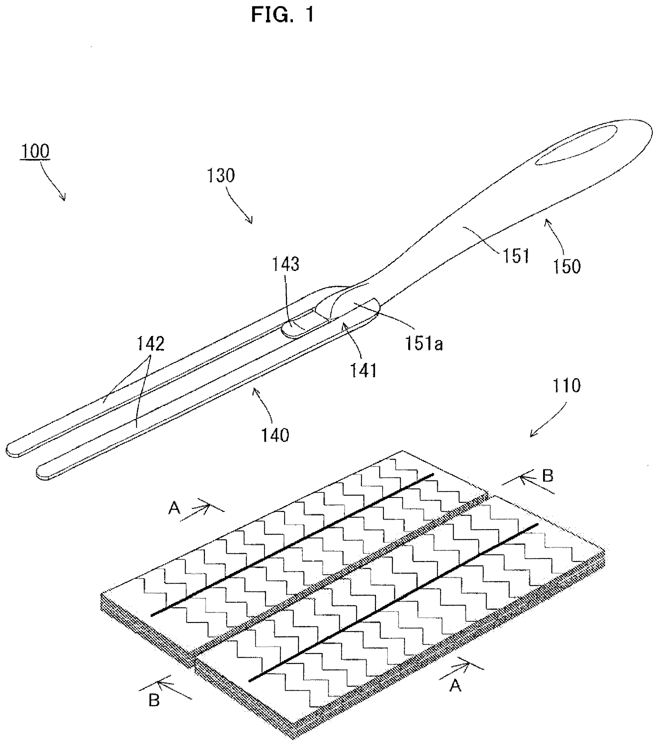

FIG. 1 shows the cleaning tool 100 according to this embodiment in perspective view, in a state disassembled into a cleaning element 110 and a cleaning element holder 130. As shown in FIG. 1, the cleaning tool 100 comprises the cleaning element 110 and the cleaning element holder 130.

The cleaning element 110 has a function of wiping, sweeping or scraping dirt on the region to be cleaned. The cleaning element 110 is in a sheet-like or plate-like form at the time of purchase or in the initial unused state, and in use, it is loosened such that its volume is increased. As shown in FIG. 1, the cleaning element 110 has a rectangular shape in plan view, extending in a predetermined longitudinal direction (the direction of the length), and has a layered structure in which a plurality of sheets (a cleaning element part 116 and a holding sheet part 112 as described below) having the same planar shape are overlaid one on the other, which will be explained in more detail below. The cleaning element 110 herein is a feature that corresponds to the "cleaning element" according to this invention. The cleaning element 110 may also have a square or other shape in plan view as necessary. The cleaning element 110 may be of disposable type designed for single use, disposable type designed for multiple use which can be used several times, while holding dust which has been removed from the region to be cleaned, on the brush portion, or reusable type which can be reused by washing.

The cleaning element holder 130 is removably attached to the cleaning element 110. The cleaning element holder 130 is an elongate member including the holder body 140 and the handle 150 connected to each other. The cleaning element holder 130 is a feature that corresponds to the "cleaning element holder" according to this invention. The handle 150 includes a handle body 151 extending in an elongate form and a connection 151a disposed between the handle body 151 and the holder body 140. The handle body 151 is a part to be held by a user. The handle body 151 and the holder body 140 are fixedly connected at the connection 151a. An appropriate structure of the cleaning element holder 130 to be used here includes a structure in which the holder body 140 and the handle 150 (the handle body 151 and the connection 151a) are integrally formed, a structure in which two of the holder body 140, the handle 150 and the connection 151a are integrally formed, and a structure in which the holder body 140 and the handle 150 are separately formed and designed to be fixedly connected together. The handle 150 and the handle body 151 here form the "grip" according to this invention.

The holder body 140 has a function of detachably holding the cleaning element 110. The holder body 140 includes a pair of right and left holding plates 142 and a retaining plate 143 which are formed on a base 141 of the handle 150. The holding plates 142 extend forward in the longitudinal direction from the base 141 and parallel with a predetermined spacing therebetween on the same plane. In other words, the holder body 140 has a bifurcated form. Each of the holding plates 142 typically has a constant width in the longitudinal direction or is tapered. The holding plates 142 here form the "holding elements" according to this invention. As for the sectional shape of the holding plates 142, rectangular, square, circular or polygonal shape can be appropriately used. The retaining plate 143 extends forward between the pair holding plates 142 and is convexly curved downward. The retaining plate 143 further has an engagement lug (not shown) on the underside. Further, in this specification, the extending direction of the pair holding plates 142 is defined as the longitudinal direction of the cleaning tool 100 and the cleaning element 110, and the direction of parallel placement of the pair holding plates 142 is defined as the lateral direction of the cleaning tool 100 and the cleaning element 110.

Each of the holding plates 142 can be inserted into an associated insert region (an insert region 115 which is described below) formed in the cleaning element 110 and have a function of holding the cleaning element 110 in the inserted state. In the inserted state, each of the holding plates 142 is fitted in the insert region by close sliding contact, so that the cleaning element 110 is securely attached to the holding plate 142. Further, in the inserted state, the retaining plate 143 presses the cleaning element 110 from above, and the engagement lug (not shown) formed on the underside of the retaining plate 143 serves as a stopper for preventing the cleaning element 110 from coming off. Thus, in the inserted state in which the holding plates 142 are inserted into the insert region of the cleaning element 110, the cleaning element 110 is reliably retained by the holder body 140.

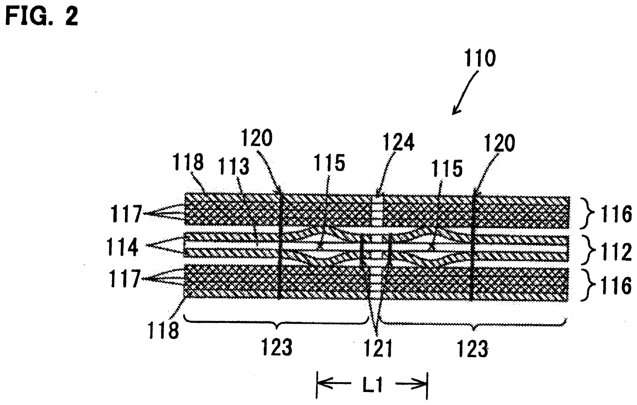

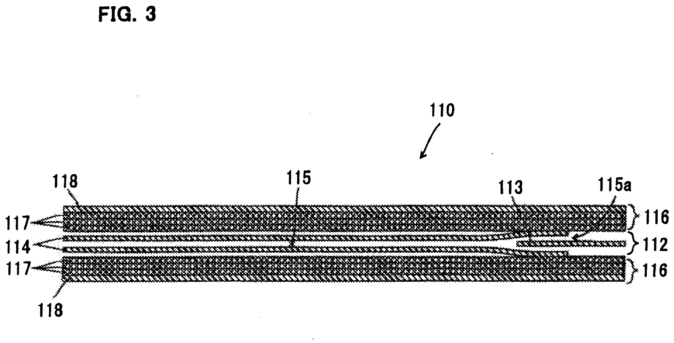

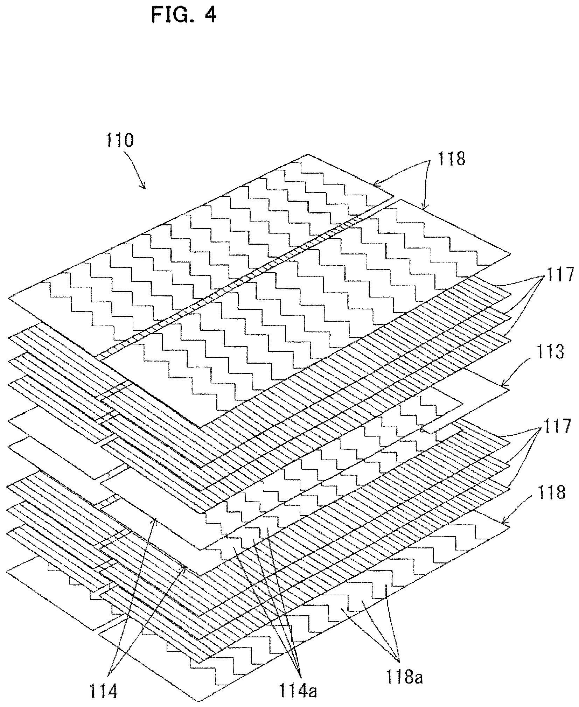

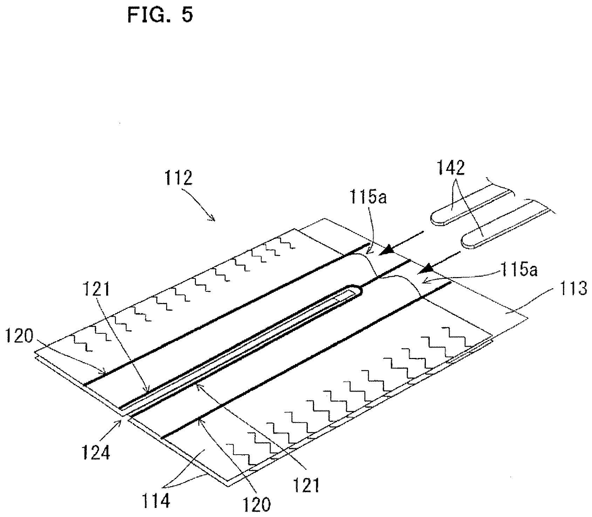

The structure of the cleaning element 110 is specifically shown in FIGS. 2 to 5. FIG. 2 is a sectional view of the cleaning element 110, taken along line A-A in FIG. 1, and FIG. 3 is a sectional view of the cleaning element 110, taken along line B-B in FIG. 1. Further, FIG. 4 is a perspective view of the cleaning element 110 of FIG. 1 which is shown separated into elements of a layered structure, and FIG. 5 is a perspective view of the holding sheet part 112 of the cleaning element 110 in FIG. 2.

As shown in FIGS. 2 to 5, in the cleaning element 110 of this embodiment, the cleaning element sheet parts 116 are overlaid on the both sides of the holding sheet part 112.

Particularly, as shown in FIG. 5, in the holding sheet part 112, a base sheet 113 is disposed between two holding sheets 114 and the base sheet 113 protrudes from the holding sheets 114 on the side of insertion of the holding plates 142. In this state, the holding sheet part 112 is fusion-bonded together along fusion bonding lines 120, 121. Thus, an insert region 115 into which the holding plates 142 can be inserted is formed between the two holding sheets 114. Further, the base sheet 113 can smoothly guide the holding plates 142 into an opening 115a of the insert region 115. The insert region 115 herein is a feature that corresponds to the "insert region" according to this invention.

In this embodiment, a center distance (distance L1 in FIG. 2) between the right and left insert regions 115 of the cleaning element 110 which is not yet attached to the cleaning element holder is designed to be longer than a center distance between the pair holding plates 142. Further, the cleaning element 110 has a slit-like space 124 extending in the longitudinal direction and is split into a pair of right and left elongate split cleaning parts 123 by the space 124. The space 124 serves as a space into which the object to be cleaned can be inserted, which will be explained in more detail below. The space 124 herein is a feature that corresponds to the "space" according to this invention. Each of the cleaning element sheet parts 116 includes three fiber assemblies 117 and a front sheet 118 which are overlaid one on the other, and in this state, the cleaning element sheet parts 116 are arranged such that the front sheets 118 of the cleaning element sheet parts 116 are disposed on the top and bottom sides of the cleaning element 110.

Each of the holding sheets 114 and the front sheets 118 preferably has a plurality of zigzag strips (strip portions) 114a and 118a at the both end sides in its lateral direction. In this case, the holding sheets 114 and the front sheets 118 are also referred to as strip sheets. The strips 114a, 118a herein are features that correspond to the "split pieces" according to this invention. The strips 114a, 118a having such construction are provided with a highly effective cleaning function which can easily trap dust or scrape dust out of the depression. Further, the strips 114a, 118a may have the same kind or different kinds of shape appropriately selected from various shapes, such as zigzag, linear and curved shapes. In this embodiment, each of the strips 114a, 118a extends in the longitudinal direction of the split cleaning parts 123 (in a direction transverse to the extending direction of the holding plate 142).

The construction of the nonwoven fabric forming the above-described base sheet 113, holding sheet 114 and front sheet 118 and the construction of the fiber assembly 117 are now explained in detail.

### (Construction of Nonwoven Fabric)

The base sheet 113, the holding sheet 114 and the front sheet 118 can typically be formed of sheet-like nonwoven fabric comprising thermal melting fibers (thermoplastic fibers) and thus referred to as the "nonwoven fabric sheet". The base sheet 113, the holding sheet 114 and the front sheet 118 herein form the "nonwoven fabric sheet" according to this invention. The nonwoven fabric has a sheet-like configuration formed by fixing or intertwining fibers by mechanical, chemical or heat treatment. The nonwoven fabric partly includes thermoplastic fibers and thus can be fusion bonded. Further, the nonwoven fabric has a plurality of strips. Examples of the thermal melting fibers (thermoplastic fibers) include polyethylene, polypropylene and polyethylene terephthalate. The nonwoven fabric preferably comprises thermoplastic fibers having practical strength of 10 to 100 g/m². The nonwoven fabric may be manufactured by through-air bonding, spun bonding, thermal bonding, spun lacing, point bonding, melt blowing, stitch bonding, chemical bonding, needle punching or other similar processes. This nonwoven fabric is a feature that corresponds to the "nonwoven fabric" according to this invention. In order to enhance the dust wiping function, it is preferred to use a nonwoven fabric having higher rigidity. Further, as an alternative to or in addition to the nonwoven fabric, strips made of urethane, sponge, woven fabric, net, split cloth or other similar materials may be used.

### (Construction of Fiber Assembly)

The fiber assembly 117 is a single fiber structure formed by fibers, a fiber structure having fibers aligned in the length direction and/or the radial direction (twist yarn, spun yarn, yarn to which a plurality of filaments are partially connected), or an assembly of the fiber structures. The fiber assembly 117 partially includes thermoplastic fibers and can be fusion bonded. The fibers forming the fiber assembly 117 are elements of yarn, textile or the like and defined as being thin and flexible fibers having a substantially longer length compared with the thickness. Typically, a long continuous fiber is defined as a filament and a short fiber as a staple. Like the strips 114a and 118a of the holding sheet 114 and the front sheet 118, the fibers of the fiber assembly 117 extend in elongate shape in a direction transverse to the extending direction of the holding plate 142. The fiber assembly 117 is also referred to as the "fiber bundle" having a plurality of fibers in a bundle. The fiber assembly 117 herein is a feature that corresponds to the "fiber assembly" according to this invention.

In the representative example shown in FIGS. 2 to 4, three fiber assemblies 117 are stacked in layers, but one or more layers of fiber assemblies may be used as necessary. Preferably, the fiber assembly 117 has a planar structure having a predetermined flat or curved surface and has a three-dimensional form having a certain thickness or has a thin sheet-like form. The "fiber assembly" is typically formed of polyethylene (PE), polypropylene (PP), polyethylene terephthalate (PET), nylon, rayon or the like. In practical use, an assembly of filaments formed by opening a tow is frequently used as the fiber assembly. It is particularly preferable that the fiber assembly comprises conjugated fibers having a core of polypropylene (PP) or polyethylene terephthalate (PET) and a core covering sheath of polyethylene (PE). Further, the filaments of the fiber assembly are preferred to have a fineness of 0.5 to 66 dtex. The individual fiber assembly may contain fibers of substantially the same fineness, or it may contain fibers of different fmenesses. When using fibers containing thermoplastic resin, it is preferred to use at least two or more kinds of resins having different melting points (for example, resins between which the difference in the melting point is 20°C or more).

Further, in order to enhance the dust wiping function, it is preferred to use a fiber assembly including fibers having higher rigidity or fibers having higher fineness. It is further preferred that the fiber assembly has crimped fibers. In this case, it is preferred to use crimped fibers having approx. 2 to 12 crimps per cm. (5 to 30 crimps per inch). Here, the crimped fibers are fibers subjected to a predetermined crimping process and easily intertwined with each other. With the fibers being crimped, the fiber assembly becomes bulkier than before the holder is attached thereto, and dust can be easily captured by the crimped portions. This structure can be realized especially by using crimped fibers opened from a tow. Further, in order to reliably adsorb dirt, dust or the like, it is preferred to use fibers containing dust adsorbent oil.

For the fiber assembly, flat yarns or split yarns may also be used. The flat yarns are prepared by slitting a film into tapes and by stretching the tapes in the longitudinal direction. The split yarns are prepared by splitting a thermoplastic film resin in the direction perpendicular to the orientation direction of the resin so that the film is fibrillated and interconnected into a net shape. Alternatively, a nonwoven fabric which is bulky and has low fiber density, such as a through-air bonded nonwoven fabric, may be used to form the fiber assembly.

The kinds and numbers of the component parts of the cleaning element 110 are not limited to those described in the above-described example, and can be selected as necessary.

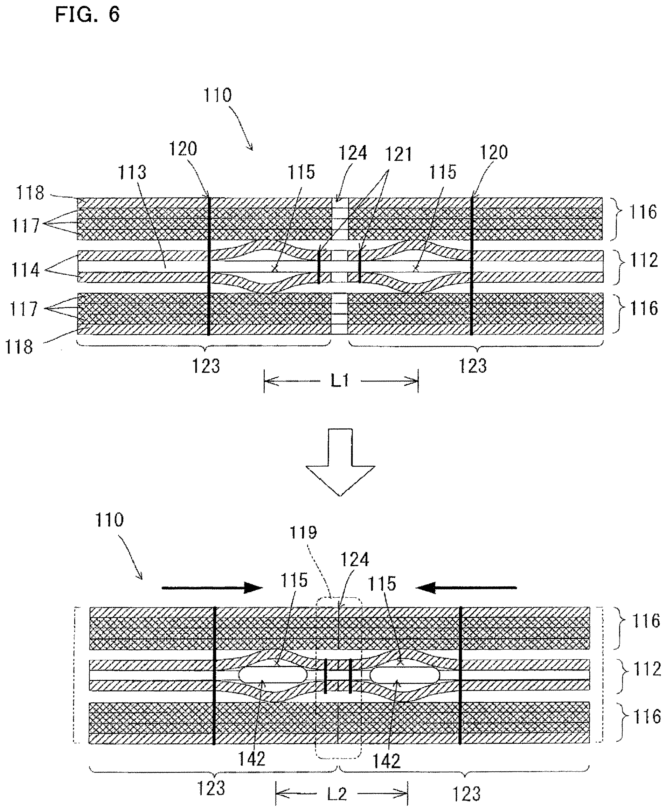

Referring to FIG. 6, operation of the cleaning tool 100 having the above-described construction is described. FIG. 6 is a sectional view of the cleaning element 110 according to this embodiment, in the states before and after attachment of the cleaning element holder. As shown in FIG. 6, the center distance L1 between the right and left insert regions 115 of the cleaning element 110 which is not yet attached to the cleaning element holder is designed to be longer than the center distance L2 between the pair holding plates 142. On the other hand, when the pair holding plates 142 are inserted into the right and left insert regions 115, the right and left split cleaning parts 123 are deformed toward each other according to the center distance L2 between the pair holding plates 142. As a result, after attachment of the cleaning element holder, an overlap region 119 is formed in the space 124 between the right and left split cleaning parts 123 facing each other, by surface contact, overlapping or intertwining of the holding sheets 114, the fiber assemblies 117 and the front sheets 118. When a cleaning operation is performed with an object to be cleaned inserted into the space 124, in order to enhance the cleaning effect, the overlap length (overlap width) of the overlap region 119 is preferably 1 mm or longer in the lateral direction in FIG. 6. Further, the overlap length is preferably as long as the center distance L2 between the pair holding plates 142.

With such construction, a shape-retaining function is provided at least by overlapping of the fiber assemblies 117 between the adjacent split cleaning parts 123. As a result, the entire cleaning element 110 can be prevented from drooping, and unnecessary clearance can be prevented from being formed in the space 124. Further, the contact area between the object to be cleaned and the split cleaning parts 123 can be increased by wrapping the object to be cleaned between the split cleaning parts 123. Thus, the cleaning effect of the object to be cleaned which is inserted into the space 124 can be enhanced. Further, deterioration of the appearance of the cleaning tool 100 which may be caused by unnecessary clearance formed in the space 124 can be prevented. As a result, users can be convinced that the cleaning element 110 has a high cleaning effect and the user's cleaning motivation can be effectively enhanced.

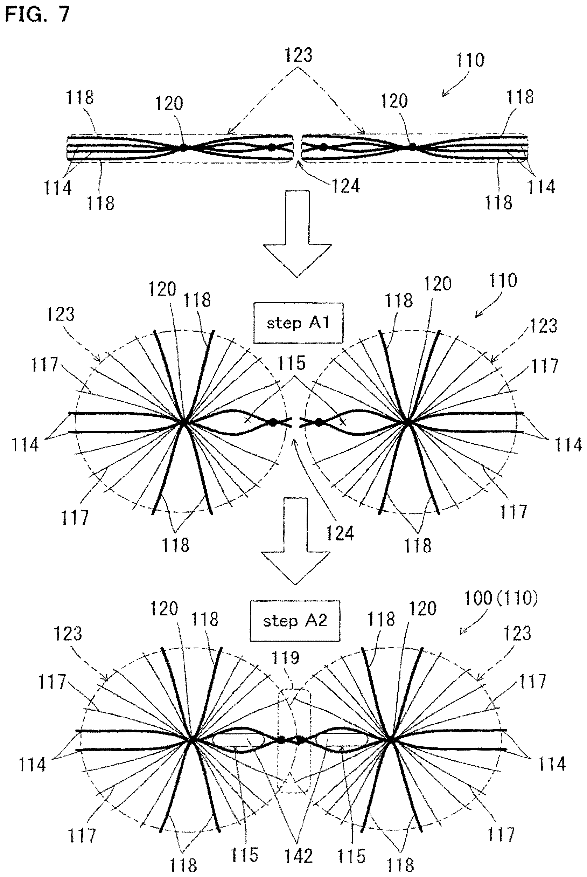

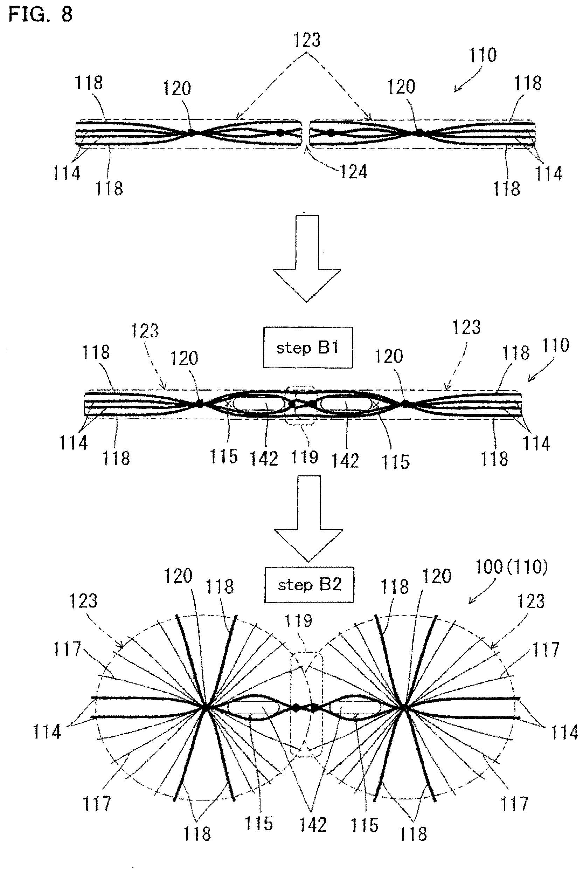

Further, the split cleaning parts 123 of the cleaning element 110 are rectangular in section at the time of purchase or in the initial unused state. In use for actual cleaning operation, preferably, each of the split cleaning parts 123 is loosened or fluffed by the user such that its volume is increased. This loosening operation may be performed before attachment of the cleaning element holder by a first procedure, or it may be performed after attachment of the cleaning element holder by a second procedure. FIGS. 7 and 8 are sectional views of the split cleaning parts 123 in this embodiment and illustrate the first and second procedures for attaching the cleaning element holder, respectively.

In the first procedure shown in FIG. 7, first, in step A1, the split cleaning parts 123 are loosened by the user. At this time, in this embodiment, the holding sheets 114, the fiber assemblies 117 and the front sheets 118 of the respective split cleaning parts 123 have the same length in a direction transverse to the longitudinal direction of the split cleaning parts 123 (in a direction transverse to the extending direction of the holding plate 142) from the fusion bonding line 120. The fusion bonding line 120 is a feature that corresponds to the "bonded part" according to this invention. Therefore, when the user performs the loosening operation in step A1, each of the split cleaning parts 123 becomes bulky into a generally circular or elliptical shape as viewed in section in a direction transverse to the extending direction of the holding plate 142. In this bulky state, the strips 114a and 118a of the holding sheet 114 and front sheet 118 and the fibers of the fiber assemblies 117 radiate out from the fusion bonding line 120, as viewed in section in the direction transverse to the longitudinal direction of the split cleaning parts 123 (the direction transverse to the extending direction of the holding plate 142). Subsequently, in step A2, the two holding plates 142 are inserted into right and left insert regions 115. As a result, the pair of right and left split cleaning parts 123 are deformed toward each other according to the distance between the pair holding plates 142 and form the overlap region 119 by surface contact, overlapping or intertwining of the holding sheets 114, the fiber assemblies 117 and the front sheets 118.

In the second procedure shown in FIG. 8, first, in step B1, the pair holding plates 142 are inserted into the right and left insert regions 115. As a result, the pair of right and left split cleaning parts 123 are deformed toward each other according to the distance between the pair holding plates 142 and form the overlap region 119 by surface contact, overlapping or intertwining of the holding sheets 114, the fiber assemblies 117 and the front sheets 118. Subsequently, in step B2, when the split cleaning parts 123 are loosened by the user, like in step A2 shown in FIG. 7, each of the split cleaning parts 123 becomes bulky into a generally circular shape in section.

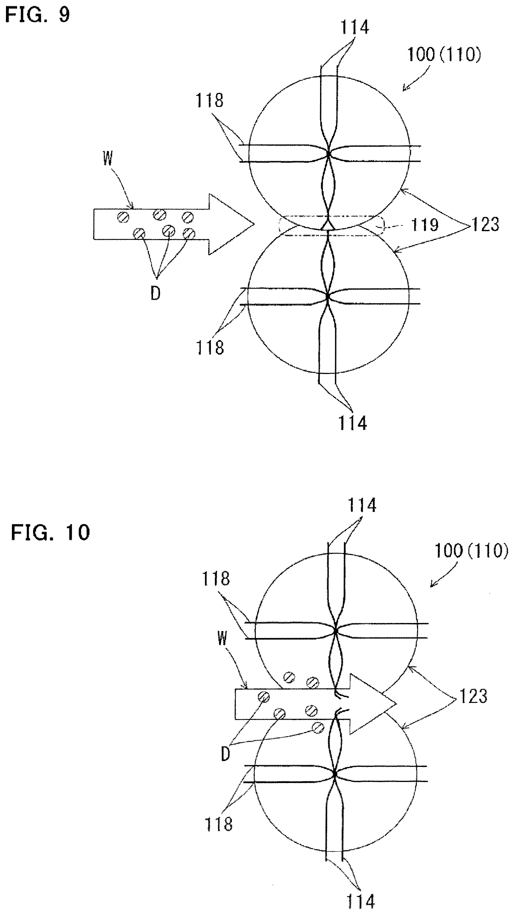

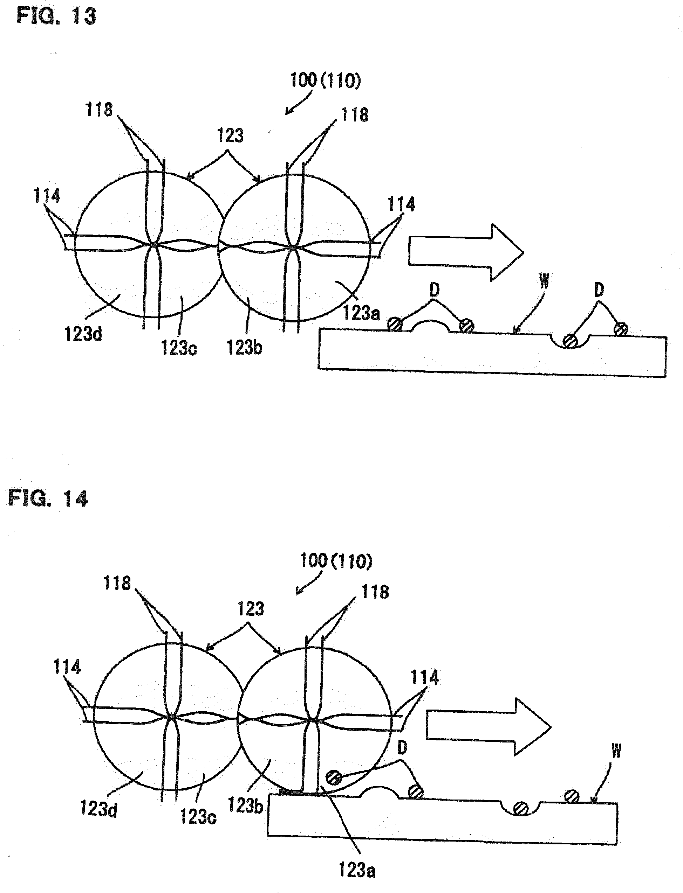

Referring to FIGS. 9 to 17, cleaning operation using the cleaning tool 100 which is obtained through the above-described first or second procedure is described. FIGS. 9 to 12 show the manner in which the object to be cleaned W is wiped between the pair split cleaning parts 123 of the cleaning element 110 in the cleaning tool 100 of this embodiment, and FIGS. 13 to 17 show the manner in which the object to be cleaned W is wiped on the outer surfaces of the pair split cleaning parts 123 of the cleaning element 110 in the cleaning tool 100 of this embodiment.

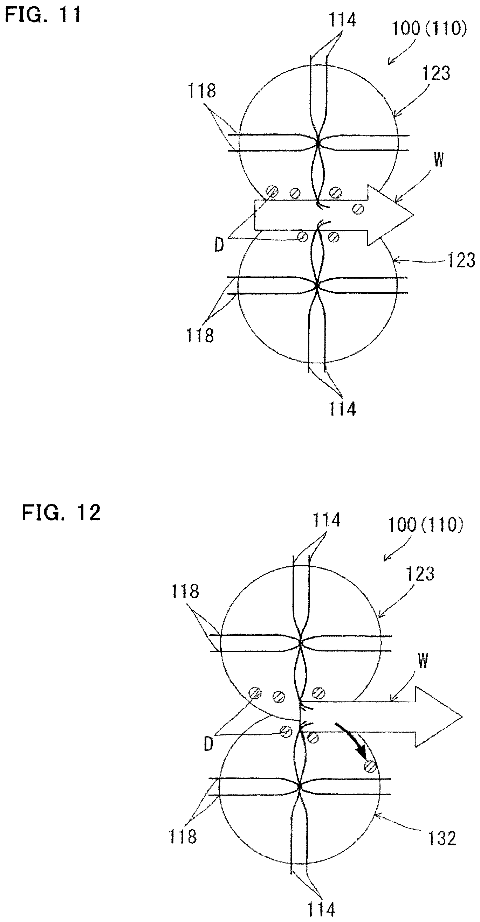

As shown in FIG. 9, it is assumed that a three dimensional object to be cleaned W is cleaned between the pair split cleaning parts 123 of the cleaning element 110. In this case, as shown in FIG. 10, the cleaning element 110 is pressed against the object to be cleaned such that the overlap region 119 of the pair split cleaning parts 123 conforms to the object to be cleaned. The pair holding plates 142 are preferably formed of an elastic material, or typically a plastic material having elasticity, which allows the pair holding plates 142 to be elastically deformed away from each other. Therefore, the object to be cleaned W is pushed into the space 124 while pushing and opening up the overlap region 119 against an elastic biasing force of the pair holding plates 142. Then, firstly, dust, dirt or the like (hereinafter also referred to as "dust etc. D") on the object to be cleaned W is adsorbed particularly by the fiber assemblies 117 at the inlet area of the space 124. At this time, the contact area between the space 124 and the object to be cleaned W is large at the inlet area of the space 124, so that the object to be cleaned can be wiped well at the inlet area. Particularly, the holding sheets 114, the fiber assemblies 117 and the front sheets 118 in the overlap region 119 of the cleaning element 110 effectively entwine with the dust etc. D on the surface of the three-dimensional object to be cleaned and thus can reliably trap the dust etc. D. When the object to be cleaned is further pushed forward into the space 124, as shown in FIG. 11, the remaining dust etc. D which cannot be adsorbed by the fiber assemblies 117 at the inlet area of the space 124 is scraped off by the strips 114a of the holding sheets 114 and then immediately adsorbed by the fiber assemblies 17. Further, in this embodiment, the length of the holding sheets 114, the fiber assemblies 117 and the front sheets 118 is preferably set such that each of the split cleaning parts 123 has the largest possible diameter in section. With such construction, the distance and time of contact of the cleaning element can be increased with respect to the object to be cleaned W which passes between the pair split cleaning parts 123. As a result, even if the holding sheets 114 are not provided with the strips 114a, the effect of wiping out the dust etc. D can be enhanced. Further, as shown in FIG. 12, some of the dust etc. D scraped off by the strips 114a of the holding sheets 114 may not be adsorbed by the fiber assemblies 117 and fall from the object to be cleaned. Such dust etc. D is reliably trapped at the rear end side of the fiber assemblies 117 (the inlet area of the space 124) as shown by the arrow in FIG. 12. Such cleaning operation is also effective in the case of wiping the object to be cleaned W by inserting at least one of the split cleaning parts 123 into a clearance (or a slit or opening) on the side of the object to be cleaned W.

Now, as shown in FIG. 13, it is assumed that an uneven object to be cleaned W is planarly cleaned by the pair split cleaning parts 123 of the cleaning element 110. In this case, in this embodiment, the cleaning element 110 contacts the plane surface of the object to be cleaned W via the pair split cleaning parts 123, so that the user can secure a stable wiping angle during wiping operation without keeping the wrist stabilized more than necessary. Further, the two split cleaning parts 123 contact the object to be cleaned W, so that an effect for two wiping operations can be obtained in a single wiping operation. Particularly, the fiber assemblies 117 of the pair split cleaning parts 123 form four adsorbing regions 123a, 123b, 123c, 123d with respect to the object to be cleaned W. Each of the adsorbing regions 123a, 123b, 123c, 123d has a fan-like form, which can effectively secure a desired adsorbing region for adsorbing the dust etc. D. Further, each of the adsorbing regions 123a, 123b, 123c, 123d has an arcuate contact surface and contacts the object to be cleaned W mainly at two projections, or a projection between the first adsorbing region 123a and the second adsorbing region 123b and a projection between the third adsorbing region 123c and the fourth adsorbing region 123d. Therefore, the adsorbing regions can be smoothly deformed when they are slid along the surface of the object to be cleaned W. As a result, friction between the adsorbing regions and the object to be cleaned W can be reduced, so that smooth cleaning operation can be realized, that is to say, the cleaning tool feels light to use in cleaning operation.

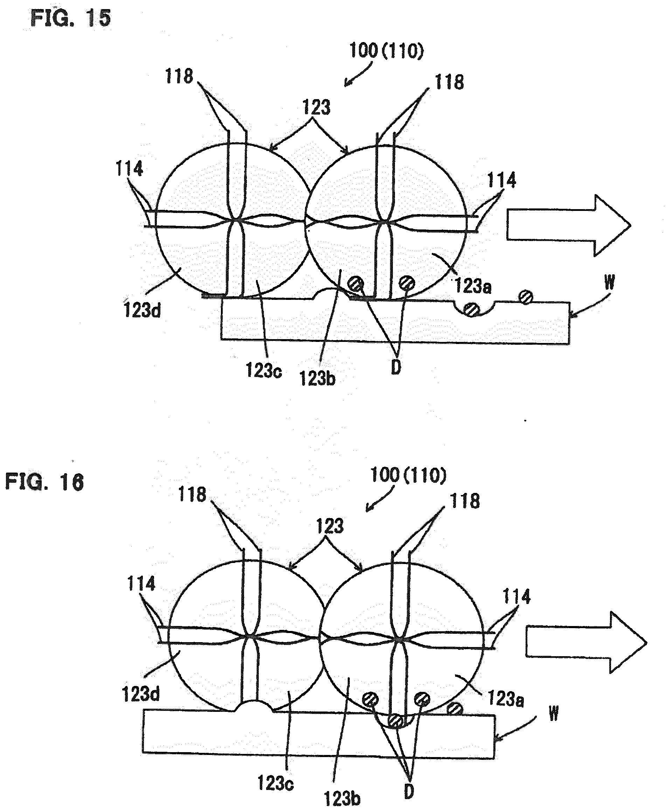

More specifically, first, as shown in FIG. 14, when the cleaning element 110 is moved along the surface of the object to be cleaned W, the dust etc. D is adsorbed by the fiber assemblies 117 of the first adsorbing region 123a. When the cleaning element 110 is further moved, as shown in FIG. 15, the dust etc. D hiding behind a projection is scraped out by the strips 118a of the front sheets 118 between the first adsorbing region 123a and the second adsorbing region 123b, and adsorbed by the fiber assemblies 117 of the second adsorbing region 123b. When the cleaning element 110 is further moved, as shown in FIG. 16, the dust etc. D in a depression is adsorbed by the fiber assemblies 117 of the first adsorbing region 123a. Even if the dust etc. D is not adsorbed by the fiber assemblies 117 of the first adsorbing region 123a, the dust etc. D is scraped out by the strips 114a of the holding sheets 114 between the first adsorbing region 123a and the second adsorbing region 123b, and then adsorbed by the fiber assemblies 117 of the second adsorbing region 123b. Or even if the dust etc. D is not completely scraped out, the dust etc. D is moved rearward within the depression and adsorbed by the fiber assemblies 117 of the second adsorbing region 123b. Further, the dust etc. D which cannot be adsorbed by the fiber assemblies 117 of the second adsorbing region 123b is adsorbed by the fiber assemblies 117 of the third adsorbing region 123c. Further, the dust etc. D which cannot be adsorbed by the fiber assemblies 117 of the third adsorbing region 123c is scraped out again by the strips 114a of the holding sheets 114 between the third adsorbing region 123c and the fourth adsorbing region 123d, and finally adsorbed by the fiber assemblies 117 of the forth adsorbing region 123d. Or even if the dust etc. D is not completely scraped out, the dust etc. D is moved rearward within the depression and finally adsorbed by the fiber assemblies 117 of the forth adsorbing region 123d.

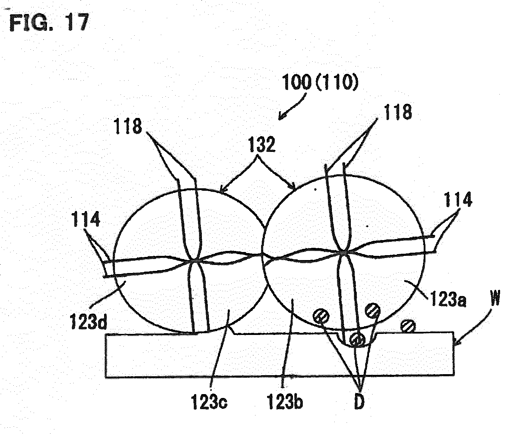

In an operation of wiping a wide plane surface of the object to be cleaned W, when the user's wrist is unstable or when the object to be cleaned W is high up, it is assumed that the cleaning element 110 is operated in an inclined position with respect to the surface of the object to be cleaned W. Therefore, in this embodiment, as shown in FIG. 17, the cleaning element 110 has four adsorbing regions 123a, 123b, 123c, 123d with respect to the object to be cleaned W, so that, for example, the dust etc. D which cannot be adsorbed by the first adsorbing region 123a or the second adsorbing region 123b can be adsorbed by the third adsorbing region 123c or the fourth adsorbing region 123d.

### (Other Embodiments)

The invention is not limited to the embodiment as described above, but rather, may be added to, changed, replaced with alternatives or otherwise modified. For example, the following provisions can be made in application of this embodiment.

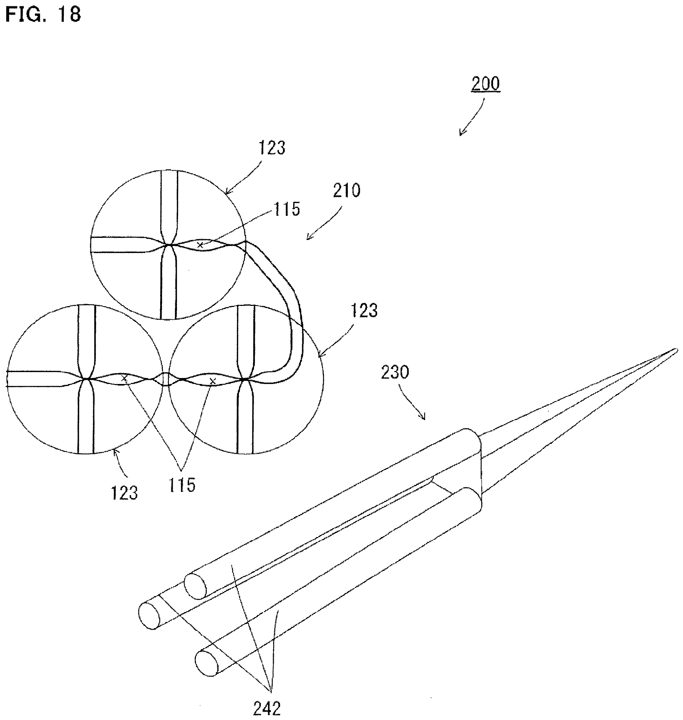

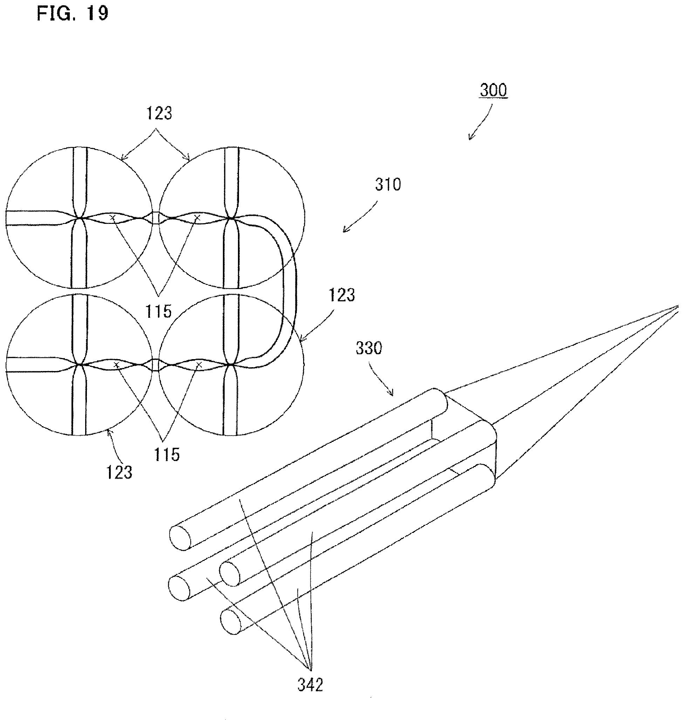

In the above-described embodiment, the cleaning element 110 is described as having the pair of right and left split cleaning parts 123. However, in the invention, the number of parts corresponding to the split cleaning parts 123 can be appropriately set in the range of two or more. Referring to FIGS. 18 and 19, other embodiments are described. A cleaning tool 200 of the embodiment shown in FIG. 18 is constructed such that a cleaning element holder 230 having elongate three holding portions 242 is attached to a cleaning element 210 consisting of three split cleaning parts 123. Specifically, in attachment of the holder, the holding portions 242 are inserted into the insert regions 115 of the split cleaning parts 123. In this case, the three split cleaning parts 123 are disposed in parallel to each other such that the centers of their sections are located at the respective apexes of a predetermined triangle. Further, a cleaning tool 300 of a further embodiment shown in FIG. 19 is provided such that a cleaning element holder 330 having four elongate holding portions 342 is attached to a cleaning element 310 consisting of four split cleaning parts. Specifically, in attachment of the holder, the holding portions 342 are inserted into the insert regions 115 of the split cleaning parts 123. In this case, the four split cleaning parts 123 are disposed in parallel to each other such that the centers of their sections are located at the apexes of a predetermined square. The cleaning tool 200 shown in FIG. 18 and the cleaning tool 300 shown in FIG. 19 can also provide the same effect as the above-described cleaning tool 100. Further, the cleaning tools 200, 300 may be constructed such that three or four split cleaning parts 123 are disposed in parallel to each other on a predetermined straight line.

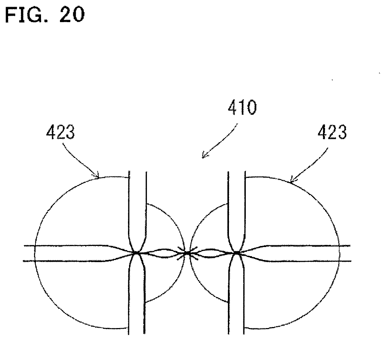

In the above-described embodiment, each of the split cleaning parts 123 of the cleaning element 110 is designed to have a generally circular or elliptical section. However, in the invention, it is necessary for this section to form the generally circular or elliptical shape in its entirety or in part. For example, the section of the split cleaning part may also have a shape of one or more fans which forms part of a circular form. This construction is shown in a cleaning element 410 of a further embodiment shown in FIG. 20. In the cleaning element 410 shown in FIG. 20, each of split cleaning parts 423 has an outside region and an inside region which have respective sections of fan-like shapes which form part of circular shapes of different diameters. This construction can be realized, for example by changing the position of the fusion bonding lines 120, 121, or the length of the holding sheets 114, the fiber assemblies 117 and the front sheets 118 according to location. With such construction, the outside and inside regions of the split cleaning parts 423 can be effectively provided with different cleaning capabilities.

### Description of Numerals

100 cleaning tool
110 cleaning element
112 holding sheet part
113 base sheet
114 holding sheet
114a strip
115 insert region
115a opening
116 cleaning element sheet part
117 fabric assembly
118 front sheet
118a strip
119 overlap region
120, 121 fusion bonding line
123, 423 split cleaning part
123a first adsorbing region
123b second adsorbing region
123c third adsorbing region
123d fourth adsorbing region
124 space
130 cleaning element holder
140 holder body
141 base
142 holding plate
143 retaining plate
150 handle
151 handle body
151a connecting portion
200, 300 cleaning tool
210, 310, 410 cleaning element
230, 330 cleaning element holder
242, 342 holding portion

## Claims

1. A cleaning element (110) for cleaning an object to be cleaned, wherein the cleaning element (110) comprises a plurality of elongate split cleaning parts (123), each of the split cleaning parts (123) having a respective insert region (115) for receiving an associated one of a plurality of holding elements (142) of an elongate cleaning element holder (130), and each of the split cleaning parts (123) includes a fiber assembly (117) formed by a plurality of fibers extending in a direction transverse to the longitudinal direction of the split cleaning part (123), and a nonwoven fabric sheet (113,114,118) made of nonwoven fabric, the fiber assembly (117) and the nonwoven fabric sheet (113,114,118) being overlaid one on the other and bonded together via a bonded part (120) extending in the longitudinal direction, wherein the fibers of each of the fiber assemblies (117) radiate out from the bonded part (120) when viewed in a section taken in a direction transverse to the longitudinal direction of the split cleaning part (123), and wherein the nonwoven fabric sheet (114,118) comprises a plurality of split pieces (114a,118a) extending in said direction transverse to the longitudinal direction of the split cleaning parts (123); **characterized in that** the fibers of each of the fiber assemblies (117) form a generally circular or elliptical shape in section in said direction transverse to the longitudinal direction of the split cleaning part (123).

2. The cleaning element as defined in claim 1, wherein the split cleaning part (123) is constructed such that each fiber assembly (117) is overlaid on both of it sides by the nonwoven fabric sheet (114, 118) and bonded together via the bonded part (120).

3. The cleaning element as defined in claim 1 or 2, wherein a space (124) is provided into which the object to be cleaned can be inserted between adjacent ones of the split cleaning parts (123).

4. A cleaning tool (100) for cleaning an object to be cleaned comprising:
an elongate cleaning element holder (130), and
the cleaning element (10), as defined in any preceding claim, to be attached to the cleaning element holder (130), wherein:
the cleaning element holder (130) includes a grip (150,151) to be held by a user and a plurality of holding elements (142) extending from the grip (150,151) in parallel in a longitudinal direction each of said holding elements (142) being inserted into the associated insert region (115) of said cleaning element (101).

## Patentansprüche

1. Reinigungselement (110) zum Reinigen eines zu reinigenden Gegenstands, wobei das Reinigungselement (110) eine Mehrzahl langgestreckter zweigeteilter Reinigungsteile (123), wobei jedes der zweigeteilten Reinigungsteile (123) einen entsprechenden Einführungsbereich (115) zum Aufnehmen eines Zugeordneten einer Mehrzahl von Halteelementen (142) eines langgestreckten Reinigungselementhalters (130) aufweist und jedes der zweigeteilten Reinigungsteile (123) eine Faseranordnung (117) aufweist, die von einer Vielzahl von Fasern gebildet wird, die sich in einer Richtung quer zur Längsrichtung des zweigeteilten Reinigungsteils (123) erstrecken, und eine Vliesstoffgewebeschicht (113, 114, 118) umfasst, die aus Vliesstoff hergestellt ist, wobei die Faseranordnung (117) und die Vliesstoffgewebeschicht (113, 114, 118) übereinandergelegt und über einen Verbindungsteil (120), der sich in der Längsrichtung erstreckt, miteinander verbunden sind, wobei die Fasern einer jeden der Faseranordnungen (117) von dem Verbindungsteil (120) ausstrahlen, wenn sie in einem Schnitt betrachtet werden, der in einer Richtung quer zur Längsrichtung des zweigeteilten Reinigungsteils (123) verläuft, und wobei die Vliesstoffgewebeschicht (114, 118) eine Mehrzahl zweigeteilter Teile (114a, 118a) umfasst, die sich in der Richtung quer zur Längsrichtung der zweigeteilten Reinigungsteile (123) erstrecken; **dadurch gekennzeichnet, dass** die Fasern einer jeden der Faseranordnungen (117) im Querschnitt in der Richtung quer zur Längsrichtung des zweigeteilten Reinigungsteils (123) eine allgemein kreisförmige oder elliptische Form bilden.

2. Reinigungselement gemäß Anspruch 1, wobei der zweigeteilte Reinigungsteil (123) so aufgebaut ist, dass jede Faseranordnung (117) auf ihren beiden Seiten von der Vliesstoffgewebeschicht (114, 118) überlagert wird und diese über den Verbindungsteil (120) miteinander verbunden sind.

3. Reinigungselement gemäß Anspruch 1 oder 2, wobei ein Zwischenraum (124) vorgesehen ist, in den das zu reinigende Objekt zwischen Beieinanderliegenden der zweigeteilten Reinigungsteile (123) eingeführt werden kann.

4. Reinigungswerkzeug (100) zum Reinigen eines zu reinigenden Gegenstands, umfassend:
einen langgestreckten Reinigungselementhalter (130) und
das Reinigungselement (10) gemäß einem der vorhergehenden Ansprüche, das an dem Reinigungselementhalter (130) zu befestigen ist, wobei:
der Reinigungselementhalter (130) einen Griff (150, 151), der von einem Benutzer zu halten ist, und eine Mehrzahl von Halteelementen (142) aufweist, die sich von dem Griff (150, 151) parallel in einer Längsrichtung erstrecken, wobei jedes der Halteelemente (142) in den zugeordneten Einführungsbereich (115) des Reinigungselements (101) eingeführt wird.

## Revendications

1. Elément de nettoyage (110) pour nettoyer un objet à nettoyer, dans lequel l'élément de nettoyage (110) comprend une pluralité de parties de nettoyage fendues allongées (123), chacune des parties de nettoyage fendues (123) ayant une région d'insert (115) respective pour recevoir un élément associé d'une pluralité d'éléments de support (142) d'un support d'élément de nettoyage allongé (130), et chacune des parties de nettoyage fendues (123) comprend un ensemble de fibres (117) formé par une pluralité de fibres s'étendant dans une direction transversale par rapport à la direction longitudinale de la partie de nettoyage fendue (123), et une feuille de tissu non tissé (113, 114, 118) réalisée avec un tissu non tissé, l'ensemble de fibres (117) et la feuille de tissu non tissé (113, 114, 118) étant superposés l'un sur l'autre et reliés via une partie reliée (120) s'étendant dans la direction longitudinale, dans lequel les fibres de chacun des ensembles de fibres (117) rayonnent à partir de la partie reliée (120) lorsqu'elle est observée dans une section prise dans une direction transversale par rapport à la direction longitudinale de la partie de nettoyage fendue (123), et dans lequel la feuille de tissu non tissé (114, 118) comprend une pluralité de pièces fendues (114a, 118a) s'étendant dans ladite direction transversale par rapport à la direction longitudinale des parties de nettoyage fendues (123) ; **caractérisé en ce que** les fibres de chacun des ensembles de fibres (117) forment une forme généralement circulaire ou elliptique en section dans ladite direction transversale par rapport à la direction longitudinale de la partie de nettoyage fendue (123).

2. Elément de nettoyage selon la revendication 1, dans lequel la partie de nettoyage fendue (123) est construite de sorte que chaque ensemble de fibres (117) est superposé sur les deux de ses côtés par la feuille de tissu non tissé (114, 118) et reliés ensemble via la partie reliée (120).

3. Elément de nettoyage selon la revendication 1 ou 2, dans lequel on prévoit un espace (124) dans lequel l'objet à nettoyer peut être inséré entre des parties adjacentes des parties de nettoyage fendues (123).

4. Outil de nettoyage (100) pour nettoyer un objet à nettoyer, comprenant :
un support d'élément de nettoyage allongé (130), et
l'élément de nettoyage (10) selon l'une quelconque des revendications précédentes, à fixer sur le support d'élément de nettoyage (130), dans lequel :
le support d'élément de nettoyage (130) comprend une poignée (150, 151) destinée à être maintenue par un utilisateur et une pluralité d'éléments de support (142) s'étendant à partir de la poignée (150, 151) parallèlement à une direction longitudinale de chacun desdits éléments de support (142) qui sont insérés dans la région d'insert (115) associée dudit élément de nettoyage (101).
